# FASCICULE DE BREVET EUROPEEN

(11) **EP 0 595 084 B1**
(45) Date de publication et mention de la délivrance du brevet: **18.02.1998**
(21) Numéro de dépôt: 93116162.4
(22) Date de dépôt: 06.10.1993
(51) Int. Cl.: B01J 19/12, G01N 1/28, H05B 6/80

(54) **Dispositif micro-ondes de conduite d'opérations chimiques**
Mikrowellenvorrichtung zur Durchführung chemischer Prozesse
Microwave apparatus for carrying out chemical reactions

(30) Priorité: 30.10.1992 FR 9213046
(43) Date de publication de la demande: 04.05.1994
(73) Titulaire: MOULINEX S.A., 75008 Paris (FR); UNIVERSITE DE CAEN, F-14032 Caen (FR)
(72) Inventeur: Rault, Sylvain Jean-Marie, F-14370 Moult (FR); Derobert, Jean-Claude, F-14550 Blain-Sur-Orne (FR)
(74) Mandataire: May, Hans Ulrich, Dr.

(56) Documents cités:
- EP-A- 0 155 893
- EP-A- 0 249 500
- EP-A- 0 387 161
- EP-A- 0 429 814
- EP-A- 0 468 896
- US-A- 4 165 773

## Description

L'invention se rapporte à un dispositif de conduite d'opérations chimiques comportant une enceinte de travail délimitée par une voûte, une sole, des parois latérales et une porte, un générateur d'énergie à micro-ondes pour ladite enceinte et un réacteur ayant au moins un col et reposant dans ladite enceinte sur un support.

Jusqu'à présent, un tel dispositif ne permettait de réaliser que des réactions à très faible volume et sans possibilité de conduire lesdites réactions. En fait, un tel dispositif ne permet que d'effectuer des essais, généralement en réacteur hermétiquement fermé et protégé, et de mettre en valeur l'accélération de synthèses chimiques sous l'effet du chauffage à micro-ondes.

On connaît du document EP-0 468 896 un dispositif dans lequel des réactions chimiques sont réalisées dans une chambre de réaction placée dans une cavité chauffée par micro-ondes. Dans le dispositif décrit, il n'est cependant possible ni de travailler, ni de contrôler la réaction chimique à l'intérieur de la chambre pendant les phases de chauffage par micro-ondes.

On connaît en outre du document EP-0 429 814 un dispositif dans lequel les réactions chimiques sont réalisées en vase clos au moyen de micro-ondes et d'un rayonnement ultraviolet. Là encore, il n'est pas possible d'effectuer un contrôle de la réaction pendant le chauffage.

On connaît enfin du document EP-0 249 500 un dispositif de conduite d'opérations chimiques dans lequel le col du réacteur est mis en relation avec un conduit d'aspiration forcée et de liaison solidaire d'un dispositif externe de conduite d'une réaction chimique par l'intermédiaire d'un passage pratiqué dans l'enceinte d'une cavité chauffée par micro-ondes. Le dispositif décrit ne permet cependant pas de conduire toutes les opérations courantes de la chimie de manière analogue à celles qui sont conduites dans un laboratoire classique.

La présente invention a pour but de pallier la limitation précédente.
Selon l'invention, l'enceinte est percée, au niveau de la voûte, de deux autres passages destinés respectivement à permettre des liaisons avec deux autres cols du réacteur, chaque passage comportant un tube de dimension appropriée qui constitue à la fois un guide de liaison et un dispositif de suppression des fuites micro-ondes hors de l'enceinte.

Grâce à l'invention, on peut conduire de l'extérieur de l'enceinte la réaction chimique dans le réacteur et réaliser notamment soit des opérations à volume constant dans lesquelles le dispositif externe comprend un condenseur de vapeur et un injecteur de liquide, soit des opérations avec distillation dans lesquelles le dispositif externe comprend une colonne à distiller et un injecteur de liquide.

Les caractéristiques et avantages de l'invention ressortiront d'ailleurs de la description qui va suivre, à titre d'exemple, en référence aux dessins annexés dans lesquels :

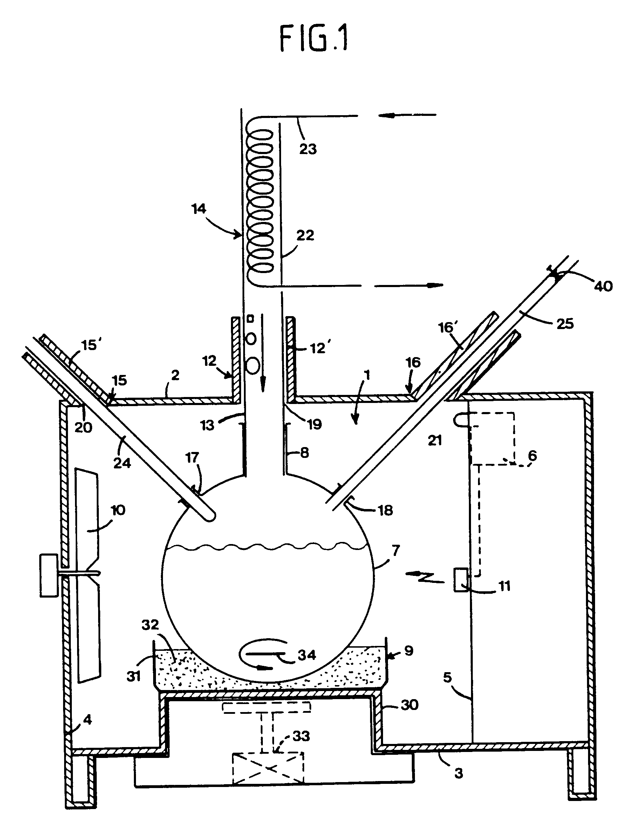

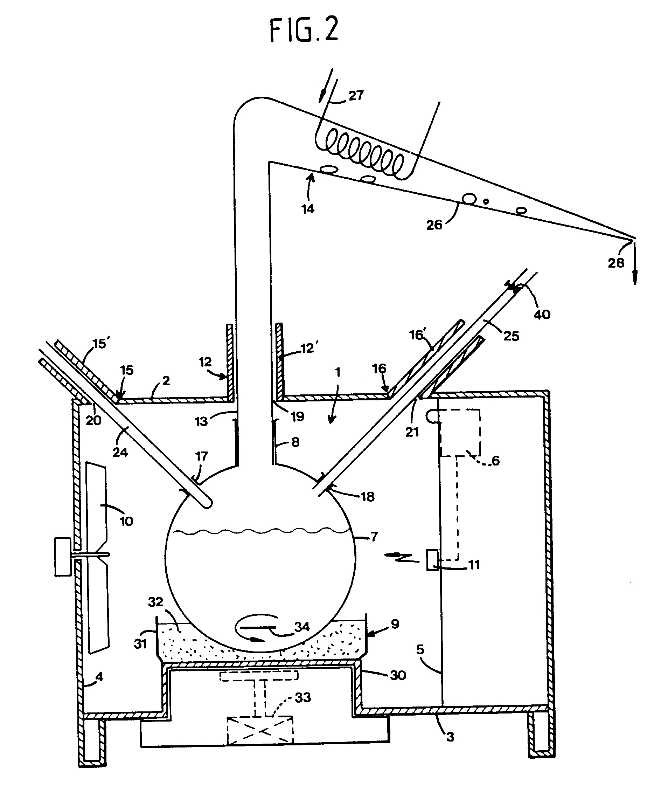

La figure 1 est une coupe verticale schématique d'un dispositif selon l'invention utilisé pour accomplir des réactions à volume constant ; la figure 2 est une vue analogue du dispositif illustré à la figure 1, mais utilisé pour accomplir des réactions avec distillation.

Le dispositif représenté aux figures 1 et 2 comporte une enceinte de travail 1 délimitée par une voûte 2, une sole 3, des parois latérales 4, 5 et une porte (non représentée), un générateur 6 d'énergie à micro-ondes pour ladite enceinte, et un réacteur 7 de type ouvert ayant au moins un col 8 et reposant dans ladite enceinte 1 au moyen d'un support 9. Cette enceinte 1 peut être équipée de façon classique d'un brasseur d'ondes rotatif 10, ainsi que d'un détecteur de température à infrarouge 11 destiné à assurer un pilotage automatique du générateur 6. Ce générateur 6 peut fonctionner, soit à puissance continue, soit à puissance variable ou variable séquentiellement, ceci en fonction des réactions chimiques à développer. Le réacteur peut présenter toutes les formes connues en soi dans le domaine de la chimie et notamment présenter une forme sphérique telle qu'illustrée.

Selon l'invention, l'enceinte 1 est percée d'au moins un passage 12 qui permet de mettre en relation le col 8 du réacteur 7 avec un conduit de liaison 13 solidaire d'un dispositif externe 14 de conduite de la réaction chimique.

Comme on le voit sur les figures 1 et 2, la voûte 2 de l'enceinte 1 est percée de trois passages, le passage 12 agencé verticalement et deux autres passages latéraux 15 et 16 destinés respectivement à permettre des liaisons avec les cols d'un ballon de type standard, c'est-à-dire le col 8 dirigé verticalement et les cols 17 et 18 orientés convenablement. Ces passages 12, 15 et 16 comportent chacun un dispositif de suppression des fuites micro-ondes hors de l'enceinte. Lesdits passages sont formés par des tubes 12', 15', 16' qui débouchent dans des orifices 19, 20, 21 pratiqués par exemple dans la voûte 2 de l'enceinte.

Selon une variante de réalisation non représentée, chaque tube 12', 15', 16' est monté articulé par exemple au moyen d'une liaison à rotule, sur l'enceinte de manière à permettre une articulation avec les cols de différents types de ballons. Ces tubes constituent donc des guides d'ondes à la coupure et permettent d'atténuer les ondes électromagnétiques pour rendre ces sorties compatibles avec les normes de sécurité en vigueur. Cette atténuation des ondes dans un tube cylindrique est connue en soi et dépend de deux facteurs a/λo et z/a où a est le rayon du tube, z est la longueur axiale, et λo représente la longueur d'onde à atténuer. Le choix du rayon du guide est tel que la longueur de l'onde à atténuer λo soit plus grande que la longueur d'onde de coupure du mode TEM. Par exemple pour une onde λo = 12,2 cm, on choisira a = 2 cm et z = 20 cm. Le mode de calcul a par exemple été décrit dans le livre de Mc GRAW - HILL BOOK Company 1957 intitulé "Microwave Measurements" de E.L. GINZTON.

Grâce à ces tubes accordés, on comprend que l'utilisation de réacteurs ouverts ne pose aucun problème à l'utilisateur et permet donc de conduire toutes les opérations courantes de la chimie et plus particulièrement celles de la chimie de synthèse organique.

Selon une première réalisation illustrée à la figure 1, le dispositif est utilisé pour accomplir des réactions à volume constant. Le dispositif externe 14 comporte à cet effet un condenseur de vapeur 22 dont le conduit 13 traverse le tube 12' et pénètre de façon sensiblement étanche dans le col 8 du réacteur 7, et qui est refroidi par une circulation d'eau 23 condensant les vapeurs de solvant. Le liquide ainsi formé retourne dans le réacteur 7 qui conserve ainsi pratiquement un volume de liquide constant. Les tubes 15' et 16' permettent respectivement le passage d'un thermomètre ou d'une sonde 24 pour pénétrer de façon étanche dans le col 17, et le passage d'un conduit 25 dans le col 18 pour introduire pendant la réaction des solides, gaz ou liquides, ledit conduit 25 étant équipé d'une vanne d'ouverture-fermeture 40.

Selon une seconde réalisation illustrée à la figure 2, le dispositif est utilisé pour réaliser des réactions avec distillation et comporte à cet effet une colonne à distiller 26 dont le conduit 13 traverse le tube 12' et pénètre de façon étanche dans le col 8 du réacteur 7, et qui est refroidie par une circulation d'eau 27, le liquide distillé s'écoulant par l'orifice 28. Les tubes 15' et 16' permettent respectivement le passage par le col 17 du thermomètre ou de la sonde 24, et le passage d'un conduit 25 d'arrivée de liquide.
Grâce à cette réalisation on peut également envisager de traiter en continu une grande quantité de liquide comprenant, par exemple, un solvant et des réactifs, la distillation permettant de récupérer le solvant tandis que les produits l'accompagnant s'accumulent au fond du réacteur. Cette réalisation permet la rectification et la récupération de solvants.

Afin d'améliorer les réactions au sein du réacteur 7, l'invention prévoit que la paroi de sole 3 présente une surélévation adéquate 30 destinée à placer le réacteur en position de travail dans la région centrale de l'enceinte 1. Grâce à cette surélévation, on peut utiliser des réacteurs de type ouvert et de volume un peu différent, tout en gardant un support de type défini ; c'est-à-dire un support présentant des propriétés aux micro-ondes telles que : faible charge, perméabilité, stabilité, matériau diélectrique... Un tel support 9 comporte un bac 31 de préférence en verre transparent aux micro-ondes contenant un matériau pulvérulent 32 tel que, par exemple, du sable "de Fontainebleau".

Dans un autre exemple de réalisation non représenté, ledit support 9 peut présenter une certaine charge de manière à pouvoir traiter des petits volumes.

Dans un mode de réalisation préféré et afin d'obtenir une bonne homogénéisation du contenu du réacteur 7, l'invention prévoit d'équiper l'enceinte 1 d'un agitateur magnétique comportant un organe moteur rotatif 33 agencé dans la surélévation 30 et un aimant 34 agencé dans le réacteur 7. A cet effet, la paroi de sole 3 est réalisée de préférence en un matériau non magnétique. De préférence pour des raisons de tenue en température, de rigidité et de propreté, la sole est réalisée en acier inoxydable.

Ainsi le dispositif selon l'invention permet d'utiliser des réacteurs ouverts de volume important pour réaliser des réactions de synthèse organique qui, dans des conditions normales de laboratoire, ne pourraient pas être obtenues ou seraient obtenues avec de très faibles rendements, inférieurs à 5 %. Par exemple, on peut réaliser une réaction du type :

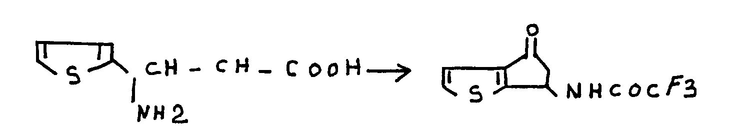

Un tel dispositif du fait de sa possibilité de conduite de la réaction au travers des passages de l'enceinte permet aussi la préparation de composés nouveaux principalement en chimie hétérocyclique.

En outre, des réactions du type : 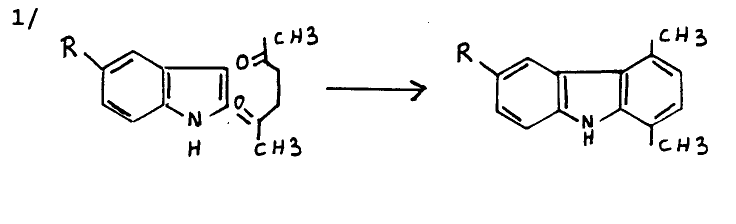 ou du type 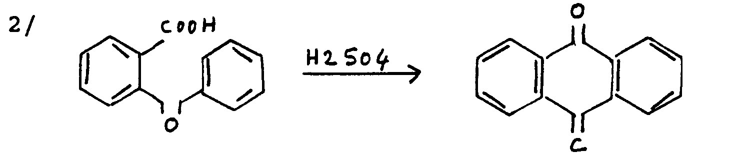 peuvent être réalisées avec des rendements quasiquantitatifs [ρ = 50 à 85% sur des quantités de l'ordre de 100 grammes] sous une application micro-ondes pendant 5 mn.

Grâce au dispositif selon l'invention, on comprendra que l'on peut envisager des applications industrielles.

## Revendications

1. Dispositif de conduite d'opérations chimiques comportant une enceinte de travail (1) délimitée par une voûte (2), une sole (3), des parois latérales (4,5) et une porte, un générateur (6) d'énergie à micro-ondes pour ladite enceinte, et un réacteur (7) ayant au moins un col (8) et reposant dans ladite enceinte sur un support (9), ladite enceinte (1) étant percée d'au moins un passage (12) qui permet de mettre en relation le col (8) du réacteur (7) avec un conduit de liaison (13) solidaire d'un dispositif externe de conduite d'une réaction chimique,
**caractérisé en ce que** l'enceinte est percée, au niveau de la voûte (2), de deux autres passages (15 et 16) destinés respectivement à permettre des liaisons avec deux autres cols (17 et 18) du réacteur (7), chaque passage (12, 15, 16) comportant un tube (12',15',16') de dimension appropriée qui constitue à la fois un guide de liaison et un dispositif de suppression des fuites micro-ondes hors de l'enceinte.

2. Dispositif selon la revendication 1,
**caractérisé en ce que** les tubes (12',15',16') sont montés articulés sur l'enceinte (1) de manière à permettre les liaisons avec différents cols de ballons.

3. Dispositif selon la revendication 1 ou 2,
**caractérisé en ce que** le support (9) comporte un bac (31) transparent aux micro-ondes et contenant un matériau pulvérulent (32).

4. Dispositif selon la revendication 3,
**caractérisé en ce que** le matériau pulvérulent (32) est du sable.

5. Dispositif selon l'une quelconque des revendications précédentes,
**caractérisé en ce que** la sole (3) de l'enceinte (1) présente une surélévation (30) de hauteur telle que le réacteur (7) soit placé dans l'espace central de ladite enceinte (1).

6. Dispositif selon l'une quelconque des revendications précédentes,
**caractérisé en ce que** l'enceinte (1) est équipée d'un agitateur magnétique (33, 34) pour le réacteur (7), et la sole (3) est constituée en un matériau non magnétique.

7. Dispositif selon les revendications 5 et 6,
**caractérisé en ce que** l'agitateur magnétique (33, 34) comprend un organe moteur (33) agencé dans la surélévation (30).

## Claims

1. Device for carrying out chemical operations, having a working enclosure (1) defined by a roof (2), a floor (3), side walls (4, 5) and a door, a generator (6) of microwave energy for the said enclosure, and a reactor (7) having at least one neck (8) and resting in the said enclosure on a support (9), the said enclosure (1) having at least one passage (12) in it which enables the neck (8) of the reactor (7) to be brought into relationship with a connection pipe (13) fixed to an external device for carrying out a chemical reaction,
characterised in that the enclosure has in it, at the roof (2), two other passages (15 and 16) designed respectively to afford connections with two other necks (17 and 18) of the reactor (7), each passage (12, 15, 16) having a tube (12', 15', 16') of appropriate size which forms both a connection guide and a device for eliminating microwave leakage from the enclosure.

2. Device according to Claim 1,
characterised in that the tubes (12', 15', 16') are pivotally mounted on the enclosure (1) so as to afford connections with different flask necks.

3. Device according Claim 1 or 2,
characterised in that the support (9) has a tank (31) which is transparent to microwaves and contains a powder material (32).

4. Device according to Claim 3,
characterised in that the powder material (32) is sand.

5. Device according to any one of the preceding claims,
characterised in that the floor (3) of the enclosure (1) has a raised part (30) whose height is such that the reactor (7) is placed in the central space of the said enclosure (1).

6. Device according to any one of the preceding claims,
characterised in that the enclosure (1) is equipped with a magnetic stirrer (33, 34) for the reactor (7), and the floor (3) is formed from a non-magnetic material.

7. Device according to Claims 5 and 6,
characterised in that the magnetic stirrer (33, 34) comprises a motor device (33) arranged in the raised part (30).

## Patentansprüche

1. Vorrichtung zur Durchführung chemischer Prozesse mit einer Arbeitskammer (1), die begrenzt ist durch ein Dach (2), einen Boden (3), Seitenwände (4,5) und eine Tür, mit einem Mikrowellengenerator (6) für die Kammer und einem Reaktionsgefäß (7) mit mindestens einem Hals (8), das in der Kammer auf einem Halter (9) ruht, wobei die Kammer (1) durch mindestens einen Durchlaß (12) durchbrochen ist, welche ermöglicht, den Hals (8) des Reaktionsgefäßes (7) mit einer Verbindungsleitung (13) zu verbinden, die mit einer äußeren Vorrichtung zur Durchführung einer chemischen Reaktion fest verbunden ist, **dadurch gekennzeichnet, daß** die Kammer auf der Höhe des Dachs (2) durch zwei andere Durchlässe (15) und (16) durchbrochen ist, die jeweils dazu dienen, Verbindungen mit zwei anderen Hälsen (17 und 18) des Reaktionsgefäßes (7) zu ermöglichen, wobei jeder Durchlaß (12, 15, 16) ein Rohr (12', 15', 16') von geeigneter Abmessung aufweist, das gleichzeitig eine Verbindungsführung und eine Vorrichtung zur Verhinderung von Mikrowellenlecks aus der Kammer bildet.

2. Vorrichtung nach Anspruch 1, **dadurch gekennzeichnet, daß** die Rohre (12', 15', 16') an der Kammer (1) angelenkt sind, so daß die Verbindungen mit verschiedenen Kolbenhälsen herstellbar sind.

3. Vorrichtung nach Anspruch 1 oder 2, **dadurch gekennzeichnet, daß** der Halter (9) eine für Mikrowellen transparente Schale (31) aufweist, die ein pulverförmiges Material (32) enthält.

4. Vorrichtung nach Anspruch 3, **dadurch gekennzeichnet, daß** das pulverförmige Material (32) Sand ist.

5. Vorrichtung nach einem der vorangehenden Ansprüche, **dadurch gekennzeichnet, daß** der Boden (3) der Kammer (1) eine Erhöhung (30) von solcher Höhe aufweist, daß das Reaktionsgefäß (7) im Mittelraum der Kammer (1) angeordnet ist.

6. Vorrichtung nach einem der vorangehenden Ansprüche, **dadurch gekennzeichnet, daß** die Kammer (1) mit einem Magnetrührer (33, 34) für das Reaktionsgefäß (7) ausgerüstet ist und der Boden (3) aus einem unmagnetischen Material besteht.

7. Vorrichtung nach den Ansprüchen 5 und 6, **dadurch gekennzeichnet, daß** der Magnetrührer (33, 34) ein in der Erhöhung (30) angeordnetes Antriebselement (33) aufweist.
